# NEUE EUROPÄISCHE PATENTSCHRIFT

(11) **EP 1 041 472 B2**
(45) Veröffentlichungstag und Bekanntmachung des Hinweises auf die Entscheidung über den Einspruch: **18.04.2007**
(45) Hinweis auf die Patenterteilung: 06.05.2004
(21) Anmeldenummer: 99106465.0
(22) Anmeldetag: 30.03.1999
(51) Int. Cl.: G05B 19/042

(54) **1-Chip-Rechneranordnung**
Single chip computing system
Système ordinateur sur un seul circuit intégré

(43) Veröffentlichungstag der Anmeldung: 04.10.2000
(73) Patentinhaber: Festo AG & Co., 73734 Esslingen (DE); Beck IPC GmbH, 35415 Pohlheim-Garbenteich (DE)
(72) Erfinder: Beck, Wilfried, 35578 Wetzlar (DE)
(74) Vertreter: Abel, Martin

(56) Entgegenhaltungen:
- EP-A- 0 227 028
- EP-A- 0 488 213
- EP-A- 0 809 366
- DE-A- 19 808 616
- US-A- 5 537 651
- "Intelligente Sensoren - Sensorik mit Zukunft", ELEKTRONIK ENTWICKLUNG 7-8/89, Seiten 11-13, XP-000770474
- PROF. DR. KRIESEL UND DR. O.W. MADELUNG: "ASI, Das Aktuator-Sensor-Interface für die Automation" 1994, CARL HANSER VERLAG, München, Seiten 11-60, XP-002062938
- "Intelligente Sensoren für die Produktionsautomatisierung", Mess- und Prüftechnik, etz Heft 4-5/1997, Seiten 36,37, XP-000721784
- Peter L. Fuhr und Euan F. Mowat: "Remote Interrogation and Control of Sensors via the Internet", SENSORS Dezember 1995, Seiten 25-29,31, XP-002050471
- XECOM Inc.: "Miniature 2400 bps Modem Module" XECOM FIRMENSCHRIFT, 1997, USA
- INTEL Corp.: "VS440FX Motherboard Technical Product Specification" INTEL FIRMENSCHRIFT, 1996, USA
- RADISYS Corp.: "SBC PCP4 and SBC PCP50D Multibus I Single Board Computers "RADISYS FIRMENSCHRIFT, 1996, USA

## Beschreibung

Die Erfindung betrifft eine 1-Chip-Rechneranordnung, die in einem Anschlusskontakte aufweisenden Chip-Gehäuse wenigstens einen Prozessor, einen Arbeitsspeicher, einen Programmspeicher, wenigstens eine Geräteschnittstelle und wenigstens eine Bus- und/oder Datennetzschnittstelle besitzt.

Derartige 1-Chip-Rechneranordnungen werden beispielsweise zur Motorsteuerung in Kraftfahrzeugen eingesetzt.

Aus der DE 19808616 A1 ist ein Verfahren und ein System zur Fernsteuerung und Informationsübertragung bekannt, bei dem von einem Zentralrechner aus über Telefonverbindungen bzw. über das Internet elektrische Geräte an geografisch entfernten Stellen gesteuert und/oder abgefragt werden. Hierzu sind die Geräte, dort Kameras, mit einem sogenannten Verbindungsserver verbunden, über den die Verbindung zum Web-Browser des Benutzers über das Internet erfolgt. Bei einer Vielzahl von zu überwachenden oder zu steuernden Geräten sind viele Verbindungsserver erforderlich, die das Gesamtsystem sehr aufwendig, insbesondere kostenaufwendig machen.

Aus der EP-A-0488213 oder aus dem Artikel "Intelligente Sensoren - Sensorik mit Zukunft", ELEKTRONIK ENTWICKLUNG 7-8/89, Seiten 11-13, XP-000770474 oder aus dem Artikel von Prof. Dr. Kriesel und Dr. O.W. Madelung "ASI, Das Aktuator-Sensor-Interface für die Automation", 1994, Carl Hanser Verlag, München, Seiten 11-60, XP-002062938 oder aus dem Artikel "Intelligente Sensoren für die Produktionsautomatisierung", Mess- und Prüftechnik, etz Heft 4-5/1997, Seiten 36, 37, XP-000721784 sind Rechneranordnungen bekannt, die in einem Chipgehäuse wenigstens einen Prozessor, eine Arbeitsspeicher und einen Programmspeicher besitzen. Darüber hinaus sind aus den beiden erstgenannten Artikeln auch 1-Chip-Rechneranordnungen bekannt, die zusätzlich serielle Schnittstellen zum Anschluss an ein Bussystem besitzen (Baustein TSS 400 oder ASI-Chip). Ein direkter Anschluss beispielsweise an das Telefonnetz ist dadurch nicht möglich, so dass hierfür extern anzuschließende Zusatzeinrichtungen erforderlich wären.

Aus der US-A-5537651 ist ein programmierbares Interface bekannt, das aus einer Vielzahl von Bauteilen besteht, jedoch nicht für den direkten Anschluss ans Telefonnetz vorgesehen ist.

Schließlich ist aus dem Artikel von Peter L. Fuhr und Euan F. Mowat: "Remote Interrogation and Control of Sensors via the Internet", SENSORS Dezember 1995, Seiten 25-29, 31, XP-002050471 eine Computeranordnung bekannt, wobei Sensoren an einen Computer anschließbar sind und von dort aus die Sensorsignale über das Internet einer Zentralstelle übermittelbar sind. Hierbei handelt es sich jedoch um eine große Computeranlage, die zur Abfrage von Sensoren in kleinen Geräten nicht geeignet ist.

Die Aufgabe der vorliegenden Erfindung besteht darin, ein einfaches und kostengünstiges Verbindungsglied zu schaffen, das die Verbindung eines zentralen Rechners mit einer Vielzahl von elektrischen Geräten ermöglicht, die nicht elektrisch miteinander verbunden sind.

Diese Aufgabe wird erfindungsgemäß durch eine 1-Chip-Rechneranordnung mit den Merkmalen des Anspruchs 1 gelöst.

Die erfindungsgemäße 1-Chip-Rechneranordnung hat den Vorteil, dass sie als kostengünstiger einfacher Chip in der Massenproduktion herstellbar ist und nachträglich je nach Anwendung programmiert werden kann. Durch die Integration eines Modems und/oder eines ISDN-Adapters im Chip oder Chip-Gehäuse kann einerseits ein direkter Anschluss beispielsweise ans Telefonnetz oder Internet und andererseits ein direkter Anschluss an Sensoren oder Aktoren des zu überwachenden und/oder zu steuernden elektrischen Geräts erfolgen, ohne dass zusätzliche Schaltungsmaßnahmen oder Schaltungen erforderlich wären. Hierdurch ist eine kostengünstige Überwachung beispielsweise von Zigaretten- oder Getränkeautomaten, Maschinen, Anlagen, Messstationen und dergleichen über das Internet bzw. Telefonnetz oder über andere Netze möglich. Jedes zu überwachende und/oder zu steuernde elektrische Gerät muss lediglich mit einer solchen 1-Chip-Rechneranordnung versehen und an das Netz angeschlossen werden. Ein Austausch einer solchen 1-Chip-Rechneranordnung ist schnell und einfach möglich.

Durch die in den Unteransprüchen aufgeführten Maßnahmen sind vorteilhafte Weiterbildungen und Verbesserungen der im Anspruch 1 angegebenen 1-Chip-Rechneranordnungen möglich.

Zum einfacheren und schnelleren Auswechseln bzw. Montieren der 1-Chip-Rechneranordnung sind die Anschlusskontakte als Steckkontakte zum Einstecken in einen mit elektrischen Anschlüssen versehenen Sockel ausgebildet. Dabei sind die Anschlüsse des Sockels zweckmäßigerweise als Löt- oder Steckanschlüsse für ein serielles Kabel ausgebildet.

Die Geräteschnittstelle ist in vorteilhafter Weise zum Anschluss einer zu steuernden und/oder zu überwachenden elek-trischen Geräteanordnung oder Maschine oder Sensoranordnung ausgebildet, wobei diese wenigstens eine Geräteschnittstelle vorzugsweise als serielle oder parallele Busschnittstelle ausgebildet ist.

Ein Ausführungsbeispiel der Erfindung ist in der Zeichnung dargestellt und in der nachfolgenden Beschreibung näher erläutert. Es zeigen:
- Figur 1: eine perspektivische Darstellung einer in einem mit Steckkontakten versehenen Chip-Gehäuse angeordnete 1-Chip-Rechneranordung sowie einen entsprechenden Stecksockel und
- Figur 2: eine Anwendung, bei der ein Zentralrechner drei elektrische Geräte über drei 1-Chip-Rechner-anordnungen über das Internet bzw. Telefonnetz steuert und/oder überwacht.

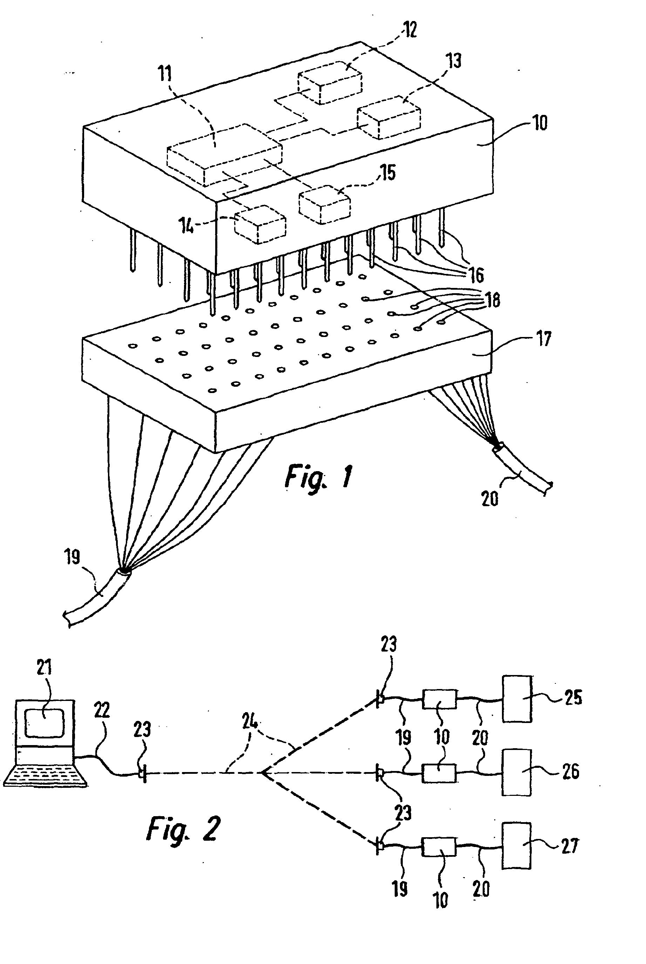

Bei dem in Figur 1 dargestellten Ausführungsbeispiel enthält ein Chip-Gehäuse 10 eine 1-Chip-Rechneranordnung, die aus einem Prozessor 11, einem Arbeitsspeicher (RAM) 12, einem Festwert- oder Programmspeicher 13, einer Bus- und/oder Netzschnittstelle 14 und einer Geräteschnittstelle 15 besteht. Das Chip-Gehäuse 10 ist mit Steckkontakten 16 versehen, mittels derer das Chip-Gehäuse 10 in einen Sockel 17 einsteckbar ausgebildet ist. Der Sockel 17 besitzt hierzu entsprechende Steckaufnahmekontakte 18.

Der Festwert- oder Programmspeicher 13 ist entweder nicht nachträglich programmierbar als ROM, besser jedoch als programmierbarer Speicher ausgebildet, beispielsweise als PROM, EPROM, EEPROM und dergleichen.

Der Sockel 17 besitzt an der Unterseite in der perspektivischen Darstellung nicht erkennbare Löt- oder Steckanschlüsse zur Verbindung der beiden Schnittstellen 14, 15 einerseits über ein Netzanschlußkabel 19 mit einem Datennetz, wie Internet oder Intranet, wobei im Falle eines Intranetanschlusses die Bus- und/oder Datennetzschnittstelle 14 beispielsweise als Ethernetschnittstelle oder Token-Ring-Schnittstelle ausgebildet sein kann. Im Falle einer Ausbildung als Internet- bzw. Telefonschnittstelle kann die Bus- und/oder Datennetzschnittstelle 14 auch ein Modem oder einen ISDN-Adapter enthalten. Prinzipiell kann ein Modem bzw. ein ISDN-Adapter jedoch auch extern angeordnet sein.

Zum Anschluß eines zu überwachenden und/oder zu steuernden elektrischen Geräts ist dieses über ein Gerätekabel 20 über den Sockel 17 mit der Geräteschnittstelle 15 verbunden. Das Gerätekabel 20 kann beispielsweise auch als Buskabel ausgebildet sein, wobei dann die Geräteschnittstelle 15 ebenfalls als Busschnittstelle ausgebildet ist. Im jeweils angeschlossenen elektrischen Gerät sind dann Aktoren und/oder Sensoren über das Gerätekabel 20 mit der Geräteschnittstelle 15 verbunden.

Die Stromversorgung der 1-Chip-Rechneranordnung bzw. deren Komponenten erfolgt über Stromversorgungskabel, die entweder im Gerätekabel 20 oder im Netzanschlußkabel 19 integriert sein können, oder es erfolgt eine separate Stromversorgungszuleitung zum Sockel 17.

Anstelle über Lötanschlüsse oder einzelne Steckanschlüsse kann das Netzanschlußkabel 19 und/oder das Gerätekabel 20 auch über Stecker mit dem Sockel 17 verbunden werden.

In Fig. 2 ist eine Anwendung dargestellt. Ein Zentralrechner 21 ist über ein Datennetzkabel 22 mit einer Telefonanschlußdose 23 verbunden. Ein Telefonnetz 24 ist durch gestrichelte Linien symbolisiert. Örtlich entfernt sind an verschiedenen Stellen drei elektrische Geräte 25 - 27 angeordnet, die jeweils über ein Gerätekabel 20, eine in einem Chip-Gehäuse 10 angeordnete 1-Chip-Rechneranordnung und ein Netzanschlußkabel 19 mit dem Telefonnetz 24 über weitere Telefonanschlußdosen 23 verbunden sind. Die Verbindung zwischen dem Zentralrechner 21 und den einzelnen 1-Chip-Rechneranordnungen erfolgt über das Internet oder andere bekannte Verbindungsarten. In Abhängigkeit von Abfrage- oder Steuerbefehlen seitens des Zentralrechners 21 können über die 1-Chip-Rechneranordnungen Steuerbefehle in den elektrischen Geräten 25 - 27 durch Aktivieren entsprechender Aktoren oder Abfragen über Sensoren durchgeführt werden. Die 1-Chip-Rechneranordnungen verfügen jeweils über eine eigene Intelligenz, so daß entsprechende Daten aufbereitet werden können. Dabei sind auch selbständige Steuervorgänge möglich, die jeweils vom Zentralrechner noch beeinflußt oder geändert werden können. Über das Telefonnetz 24 kann auch eine Programmierung der verschiedenen 1-Chip-Rechneranordnungen oder eine Umprogrammierung durch Verändern von Steuer- und Programmdaten im jeweiligen Festwert- oder Programmspeicher 23 erfolgen. Bei solchen elektrischen Geräten 25 - 27 kann es sich beispielsweise um Zigaretten- oder Getränkeautomaten, Parkuhren, Maschinen, Anlagen, Meßstationen, Haushaltsgeräte und dergleichen handeln.

In Abwandlung des dargestellten Ausführungsbeispiels kann anstelle eines Telefonnetzes 24 auch ein anderes Datennetz treten, beispielsweise ein Intranet, wie Ethernet, Token-Ring oder dergleichen. Weiterhin kann die 1-Chip-Rechneranordnung zusätzlich zu den Schnittstellen 14, 15 noch weitere Schnittstellen aufweisen, um eine variablere Anpassung an die jeweils vorliegenden Gegebenheiten durchführen zu können.

Der Sockel 17 kann auch direkt mit dem zu steuernden und/oder zu überwachenden elektrischen Gerät verbunden sein, so daß das Gerätekabel 20 bzw. dessen Leitungen lediglich mit den einzelnen Sensoren und/oder Aktoren zu verbinden sind.

## Patentansprüche

1. 1-Chip-Rechneranordnung, die in einem Anschlusskontakte (16) aufweisenden Chip-Gehäuse (10) einen Prozessor (11), einen Arbeitsspeicher (12), einen Programmspeicher (13), wenigstens eine Geräteschnittstelle (15) und wenigstens eine Bus- und/oder Datennetzschnittstelle (14) besitzt, **dadurch gekennzeichnet, dass** die wenigstens eine Bus- und/oder Datennetzschnittstelle (14) als Internet- und/oder Telefonschnittstelle ausgebildet ist, und ein Modem und/oder einen ISDN-Adapter enthält, wobei der Programmspeicher (13) über diese Bus- und/oder Datennetzschnittstelle (14) programmierbar ausgebildet ist.

2. 1-Chip-Rechneranordnung nach Anspruch 1, **dadurch gekennzeichnet, dass** die Anschlusskontakte (16) als Steckkontakte zum Einstecken in einen mit elektrischen Anschlüssen versehenen Sockel (17) ausgebildet ist.

3. 1-Chip-Rechneranordnung nach Anspruch 2, **dadurch gekennzeichnet, dass** die Anschlüsse des Sockels (17) als Löt- oder Steckanschlüsse für wenigstens ein Kabel, insbesondere ein serielles Kabel, ausgebildet sind.

4. 1-Chip-Rechneranordnung nach einem der vorhergehenden Ansprüche, **dadurch gekennzeichnet, dass** die Geräteschnittstelle (15) zum Anschluss einer zu steuernden und/oder zu überwachenden elektrischen Geräteanordnung (25 - 27) oder Maschine oder Sensoranordnung ausgebildet ist.

5. 1-Chip-Rechneranordnung nach Anspruch 4, **dadurch gekennzeichnet, dass** die wenigstens eine Geräteschnittstelle (15) als serielle oder parallele Busschnittstelle ausgebildet ist.

6. 1-Chip-Rechneranordnung Rechneranordnung nach einem der vorhergehenden Ansprüche, **dadurch gekennzeichnet, dass** eine Intranetschnittstelle vorgesehen ist, die insbesondere als Ethernetschnittstelle oder Token-Ring-Schnittstelle ausgebildet ist.

## Claims

1. 1-chip computer assembly, having in a chip carrier (10) with connector contacts (16) a processor (11), a main memory (12), a program memory (13), one or more device interfaces (15) and one or more bus and/or data network interfaces (14), **characterised in that** the bus and/or data network interface(s) (14) is or are in the form of internet and/or telephone interfaces and contain a modem and/or an ISDN adapter, wherein the program memory (13) is designed so that it may be programmed over said bus and/or data network interface (14).

2. 1-chip computer assembly according to claim 1, **characterised in that** the connector contacts (16) are in the form of plug-in contacts for plugging into a base (17) provided with electrical connections.

3. 1-chip computer assembly according to claim 2, **characterised in that** the connections of the base (17) are in the form of soldered or plug-in connections for one or more cables, in particular a serial cable or cables.

4. 1-chip computer assembly according to any of the preceding claims, **characterised in that** the device interface (15) is designed for connection of an electrical device assembly (25-27) or machine or sensor array to be controlled and/or monitored.

5. 1-chip computer assembly according to claim 4, **characterised** hi that the device interface(s) (15) is or are designed as a serial or parallel bus interface or interfaces.

6. 1-chip computer assembly according to any of the preceding claims, **characterised in that** an intranet interface is provided, in particular in the form of an ethernet interface or a token ring interface.

## Revendications

1. Calculateur monoprocesseur possédant, à l'intérieur d'un boîtier de processeur (10) présentant des contacts de raccordement (16), un processeur (11), une mémoire de travail (12), une mémoire de programme (13), au moins une interface d'équipements (15) et au moins une interface de bus et/ou réseau (14), **caractérisé en ce que** l'interface de bus et/ou réseau (14), au nombre minimum d'une, est conformée en interface Internet et/ou en interface téléphonique, et contient un modem et/ou un adaptateur RNIS, la mémoire de programme (13) étant conçue pour être programmée par l'intermédiaire de cette interface de bus et/ou de réseau (14).

2. Calculateur monoprocesseur selon la revendication 1, **caractérisé en ce que** les contacts de raccordement (16) sont conformés en connecteurs destinés à être enfichés dans un socle (17) équipé de bornes électriques.

3. Calculateur monoprocesseur selon la revendication 2, **caractérisé en ce que** les bornes du socle (17) sont conformées en connexions soudées ou en bornes enfichables pour au moins un câble, en particulier un câble de communication série.

4. Calculateur monoprocesseur selon l'une des revendications précédentes, **caractérisé en ce que** l'interface d'équipements (15) est conçue pour le branchement d'équipements électriques (25-27), ou d'une machine ou d'un détecteur, destinés à être commandés et/ou surveillés.

5. Calculateur monoprocesseur selon la revendication 4, **caractérisé en ce que** l'interface d'équipements (15), au nombre minimum d'une, est conformée en interface de bus série ou parallèle.

6. Calculateur monoprocesseur selon l'une des revendications précédentes, **caractérisé en ce qu'**est prévue une interface Intranet, conformée, en particulier, en interface Ethernet ou en interface d'anneau à jeton.
